# EUROPÄISCHE PATENTSCHRIFT

(11) **EP 2 761 213 B1**
(45) Veröffentlichungstag und Bekanntmachung des Hinweises auf die Patenterteilung: **11.04.2018**
(21) Anmeldenummer: 12759654.2
(22) Anmeldetag: 11.09.2012
(51) Int. Cl.: B65G 69/18, F16K 1/22

(54) **VENTILVORRICHTUNG UND VERFAHREN ZUM TRANSFERIEREN EINES TRANSFERMEDIUMS**
VALVE DEVICE AND METHOD FOR TRANSFERRING A TRANSFER MEDIUM
DISPOSITIF DE VANNE ET PROCÉDÉ DE TRANSFERT D'UN MILIEU DE TRANSFERT

(30) Priorität: 30.09.2011 DE 102011114573
(43) Veröffentlichungstag der Anmeldung: 06.08.2014
(73) Patentinhaber: Sartorius Stedim Biotech GmbH, 37079 Göttingen (DE)
(72) Erfinder: DIEL, Bernhard, 37127 Dransfeld (DE)
(74) Vertreter: Stehl, Astrid
(86) Internationale Anmeldenummer: PCT/EP2012/003813
(87) Internationale Veröffentlichungsnummer: WO 2013/045032

(56) Entgegenhaltungen:
- CN-U- 201 925 493
- GB-A- 888 541
- JP-A- 2003 267 480
- US-A- 2 333 496

## Beschreibung

Die Erfindung betrifft eine Ventilvorrichtung zum Transferieren eines Transfermediums, mit einem Zulauf, einem Ablauf und zwei in Fließrichtung hintereinander angeordneten Ventilscheiben, die zum Öffnen und Verschließen des sie umgebenden Lumens um eine gemeinsame Drehachse schwenkbar sind, wobei der Zulauf und der Ablauf von zwei miteinander verriegelbaren Gehäusestücken gebildet werden, deren einander zugewandte Enden jeweils eine Ventilscheibe mit einer fest verbundenen Halbwelle aufnehmen, wobei im verriegelten Zustand der Gehäusestücke die beiden Halbwellen eine gemeinsame um die Drehachse schwenkbare Welle bilden und die Ventilscheiben dicht an einander anliegen, und wobei im entriegelten Zustand der Gehäusestücke die Ventilscheiben jeweils das Lumen des sie aufnehmenden Gehäusestückes verschließen.

Die Erfindung betrifft weiterhin ein Verfahren zum Transferieren eines Transfermediums mit einer Ventilvorrichtung, deren Zulauf mit einem das Transfermedium enthaltenden ersten Behälter verbunden wird und deren Ablauf mit einem das Transfermedium aufnehmenden zweiten Behälter verbunden wird, wobei folgende Schritte durchgeführt werden:
a) Verbinden eines den Zulauf aufweisenden ersten Gehäusestückes, das an seinem dem ersten Behälter abgewandten Ende eine erste Ventilscheibe mit einer ersten Halbwelle in einer den Zulauf verschließenden Stellung aufweist, mit dem ersten Behälter;
b) Verbinden eines den Ablauf aufweisenden zweiten Gehäusestückes, das an seinem dem zweiten Behälter abgewandten Ende eine zweite Ventilscheibe mit einer zweiten Halbwelle in einer den Ablauf verschließenden Stellung aufweist, mit dem zweiten Behälter;
c) Verbinden der die Ventilscheiben aufweisenden Enden der Gehäusestücke so miteinander, dass die beiden Halbwellen eine gemeinsame Welle bilden und die Ventilscheiben mit ihren einander zugewandten Außenflächen dicht aneinander liegen;
d) Aufstecken eines Betätigungsteiles auf ein Ende der gemeinsamen Welle der Ventilscheiben; und
e) Öffnen der Ventilvorrichtung durch Verschwenken der gemeinsamen Welle mit den beiden Ventilscheiben in eine geöffnete Stellung;
f) Schließen der Ventilvorrichtung durch Zurückschwenken der beiden Ventilscheiben in ihre geschlossene Stellung, nachdem die vorgesehene Menge an Transfermedium in den zweiten Behälter transferiert ist; und
g) Lösen der Verbindung zwischen dem ersten und dem zweiten Behälter durch Abziehen des Betätigungsteiles und Lösen der beiden durch die Ventilscheiben verschlossenen Gehäusestücke voneinander.

Soweit in einem ersten Behälter enthaltene Transfermedien in einen separaten zweiten Behälter transferiert werden sollen, besteht häufig das Problem, zu verhindern, dass diese die Umwelt kontaminieren. So wird beispielsweise für eine Anschwemmfiltration ein pulverförmiges Filterhilfsmittel (Kieselgur/Diatomeenerde) verwendet, welches als Transfermedium aus einem ersten Behälter in einen zweiten Behälter transferiert wird. Kieselgur steht aber auch unter dem Verdacht, durch seine Anteile an alveolengängigen kristallinen Partikeln Erkrankungen der Atemwege bis hin zu Bronchialkarzinomen auslösen zu können. Da dies jedoch nur für trockene staubförmige Partikelformen zutrifft, ist es erforderlich, im Umgang mit solchen Filterhilfsstoffen vorbeugende technologische Maßnahmen zu treffen, die die Entstehung bzw. das Freisetzen in die Umwelt von Kieselgurstaub weitestgehend verhindern und das Einatmen erst gar nicht möglich machen. Dabei hat sich in der Biotechnologie der Einsatz von Einwegprodukten als besonders sicher erwiesen. Bei Einwegprodukten ist es von Vorteil, wenn diese kein Metall aufweisen und wenn sie relativ einfach und kostengünstig ausgebildet sind.

Aus der FR 2 770 426 A1 ist es bekannt, zwischen einem ersten Behälter mit einem pulverförmigen Transfermedium und einem zweiten Behälter, in den das Transfermedium transferiert werden soll, eine Ventilvorrichtung mit zwei hintereinander geschalteten Ventilen anzuordnen. Dabei ist das erste Ventil dem ersten Behälter und das zweite Ventil dem zweiten Behälter zugeordnet.

Nachteilig dabei ist, dass die beiden Ventile über eine Verbindungsanordnung miteinander verbunden sind, die einen Zwischenraum aufweist. Der Zwischenraum der Verbindungsanordnung muss vor einer Trennung der Behälter voneinander gereinigt werden, um eine Kontamination der Umwelt zu verhindern.

Soweit zwei Klappenventile, wie sie beispielsweise aus der US 1 857 477 bekannt sind, hintereinander geschaltet werden, besteht das oben geschilderte Problem, dass der Zwischenraum zwischen den Klappen bzw. Ventilscheiben von einer möglichen Kontamination vor einer Trennung, beispielsweise durch eine Spülung, befreit werden muss.

Aus der DE 10 2008 034 341 A1 ist eine Ventilvorrichtung zum Transferieren eines Transfermediums mit einem Zulauf, einem Ablauf und zwei in Fließrichtung hintereinander angeordneten Ventilscheiben, die zum Öffnen und Verschließen des sie umgebenden Lumens um eine gemeinsame Drehachse schwenkbar sind, bekannt.

Nachteilig ist auch hier, dass die Ventilplatten im geöffneten Zustand jeweils von ihren beiden Seiten kontaminiert werden. Auch ist ein solches Doppelventil für den Transfer von heißen Abgasströmen in Abgasanlagen nicht für den Transfer von partikulären Transfermedien unter Vermeidung von Staubentwicklung ausgelegt.

US 2 333 496 A, JP 2003/267480 A und CN 201 925 493 U offenbaren jeweils eine Ventilvorrichtung zum Transferieren eines Mediums mit einem Zulauf, einem Ablauf und zwei in Fließrichtung hintereinander angeordneten Ventilscheiben, die zum Öffnen und Verschließen des sie umgebenden Lumens um eine gemeinsame Drehachse schwenkbar sind.

GB 888 541 A offenbart eine Ventilvorrichtung zum Transferieren eines Mediums, die zwei in Fließrichtung hintereinander angeordnete Ventilscheiben aufweist, die zum Öffnen und Verschließen des sie umgebenden Lumens um eine gemeinsame Drehachse schwenkbar sind. Die die Ventilscheiben aufweisenden Enden von Gehäusestücken der Vorrichtung werden durch Ineinanderstecken und Verdrehen miteinander verrastet.

Aufgabe der vorliegenden Erfindung ist es daher, eine Ventilvorrichtung zu schaffen, die nach dem Transferieren eines Transfermediums eine Trennung von Zu- und Ablauf ohne aufwendige Reinigung und ohne Kontamination der Umgebung ermöglicht. Die Vorrichtung soll zudem einfach aufgebaut und zur kostengünstigen Verwendung als Einwegprodukt geeignet sein.

Weitere Aufgabe ist es, ein Verfahren zum Transferieren eines Transfermediums mit einer entsprechenden Ventilvorrichtung anzugeben.

Die Aufgabe bezüglich der Ventilvorrichtung wird in Verbindung mit dem Oberbegriff des Anspruches 1 dadurch gelöst, dass in einer Wand des unteren Endes des ersten Gehäusestückes zwei einander gegenüberliegende L-förmige Aussparungen angeordnet sind, die halbkreisförmige Enden der ersten Halbwelle aufnehmen, wobei die erste Halbwelle durch Verschwenken um die Längsachse der Ventilvorrichtung mit ihren Enden in quer zur Längsachse verlaufenden kurzen Schenkeln der L-förmigen Aussparungen verriegelbar ist und dass in einer verriegelten Stellung der Gehäusestücke Enden der zweiten Halbwelle in parallel zur Längsachse verlaufende lange Schenkel der L-förmigen Aussparungen eingreifen.

Dadurch, dass die Ventilscheiben jeweils eine Halbwelle aufweisen, können sie dicht aneinander anliegen, wobei die Halbwellen eine gemeinsame Welle bilden, um die sie gemeinsam schwenkbar sind. Dies führt dazu, dass die aneinanderliegenden Flächen der Ventilscheiben nicht kontaminieren, das heißt nicht mit dem Transfermedium beim Transferieren in Kontakt kommen. Nach dem Entriegeln bzw. Trennen der Gehäusestücke liegen die jeweils nicht kontaminierten Flächen der Ventilscheiben außen und verhindern eine Kontamination der Umwelt. Die Ventilscheibe kann zur Vermeidung einer unbeabsichtigten Öffnung des sie aufnehmenden Gehäusestückes mit dem Gehäusestück verrastet oder verriegelt werden. Die Ventilvorrichtung ist einfach und kostengünstig aufgebaut und kann ganz auf Metall verzichten und ist als Einwegprodukt geeignet. Zusätzliche Spülungen fallen weg, da zwischen den Ventilscheiben kein zu spülender Raum vorhanden ist.

Nach einer bevorzugten Ausführungsform der Erfindung ragen die beiden aneinanderliegenden Halbwellen mit mindestens einem Ende aus den sie aufnehmenden Wänden der Gehäusestücke heraus und bilden gemeinsam einen Formansatz, auf den ein Betätigungsteil mit einer korrespondierenden Aufnahmeöffnung aufsteckbar ist. Damit lassen die Ventilscheiben sich einfach um ihre Achse schwenken. Bevorzugt ist der Formansatz dabei im Querschnitt als ein Vierkant ausgebildet. Auch andere Querschnitte sind möglich, solange das Betätigungsteil gegenüber dem Formansatz durch einen Formschluss an einem unerwünschten Verdrehen von Betätigungsteil und Formansatz gegeneinander gehindert wird.

Gemäß einer weiteren bevorzugten Ausführungsform der Erfindung ist zwischen dem Außenrand der Ventilscheiben und deren benachbarten Wänden der Gehäusestücke eine Dichtung angeordnet. Durch die Dichtung wird eine sichere Abdichtung des Lumens der Gehäusestücke bzw. des Zulaufs und des Ablaufs gewährleistet.

Nach einer weiteren bevorzugten Ausführungsform der Erfindung weist der Außenrand der Ventilscheiben jeweils eine kappenförmig umlaufende Dichtung auf, die zum einen die Ventilscheiben gegenüber dem benachbarten Lumen und zum anderen die Ventilscheiben am Rand gegeneinander abdichtet.

Gemäß einer weiteren bevorzugten Ausführungsform der Erfindung weisen die Gehäusestücke an ihren den Ventilscheiben abgewandten Enden jeweils ein Anschlussstück zum Anschluss an ein korrespondierendes Anschlussstück auf. Damit ist die Ventilvorrichtung vielfältig einsetzbar. Das erste den Zulauf aufweisende Gehäusestück ist mit einem Anschlussstück eines ersten Behälters verbindbar und das zweite den Ablauf aufweisende Gehäusestück ist mit einem Anschlussstück eines zweiten Behälters verbindbar. Die Anschlussstücke können dabei als Teile einer dem Fachmann als Tri-Clamp-Verbindung bekannten Klemmverbindung ausgebildet sein.

Nach einer weiteren bevorzugten Ausführungsform der Erfindung ist das Transfermedium ein Schüttgut (z.B. ein Pulver oder eine Flüssigkeit) und der erste Behälter ist als ein Beutel ausgebildet, aus dem das Schüttgut in den zweiten Behälter, der als ein Ziel- oder Mischbeutel ausgebildet ist, im Falle eines Pulvers staubfrei transferierbar ist.

Die Aufgabe bezüglich des Verfahrens wird in Verbindung mit dem Oberbegriff des Anspruches 9 dadurch gelöst, dass in einer Wand des unteren Endes des ersten Gehäusestückes zwei einander gegenüberliegende L-förmige Aussparungen angeordnet sind, die halbkreisförmige Enden der ersten Halbwelle aufnehmen, wobei die erste Halbwelle durch Verschwenken um die Längsachse der Ventilvorrichtung mit ihren Enden in quer zur Längsachse verlaufenden kurzen Schenkeln der L-förmigen Aussparungen verriegelt wird und dass in der verriegelten Stellung der Gehäusestücke Enden der zweiten Halbwelle in parallel zur Längsachse verlaufende lange Schenkel der L-förmigen Aussparungen eingreifen, so dass in der entriegelten Stellung der ersten Halbwelle die erste Halbwelle mit der zweiten Halbwelle in Schritt c) die schwenkbare Welle bildet.

Damit lassen sich einfach und sicher der erste Behälter mit dem Zulauf der Ventilvorrichtung und der zweite Behälter mit dem Ablauf der Ventilvorrichtung verbinden. Entsprechend einfach lassen sich nach dem Transferieren des Transfermediums die Behälter wieder trennen, ohne dass ein aufwendiger Spülvorgang zur Vermeidung von unerwünschten Kontaminationen der Umgebung benötigt wird.

Die die Ventilscheiben aufweisenden Enden der Gehäusestücke können beispielsweise durch Ineinanderstecken und Verdrehen miteinander einfach verrastet werden.

Als Transfermedium kann beispielsweise ein pulverförmiges Filterhilfsmittel für eine Anschwemmfiltration transferiert werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:
- Figur 1:: eine räumliche Darstellung einer Ventilvorrichtung angeschlossen an einen ersten Behälter mit Transfermedium und an einen zweiten Behälter als Zielbehälter des zu transferierenden Transfermediums im getrennten Zustand der Ventilvorrichtung,
- Figur 2:: eine Seitenansicht im Schnitt der Vorrichtung von Fig. 1 im verbundenen Zustand bei geöffneter Stellung der Ventilscheiben,
- Figur 3:: eine Seitenansicht im Schnitt der Vorrichtung von Fig. 2 im verbundenen Zustand bei geschlossener Stellung der Ventilscheiben,

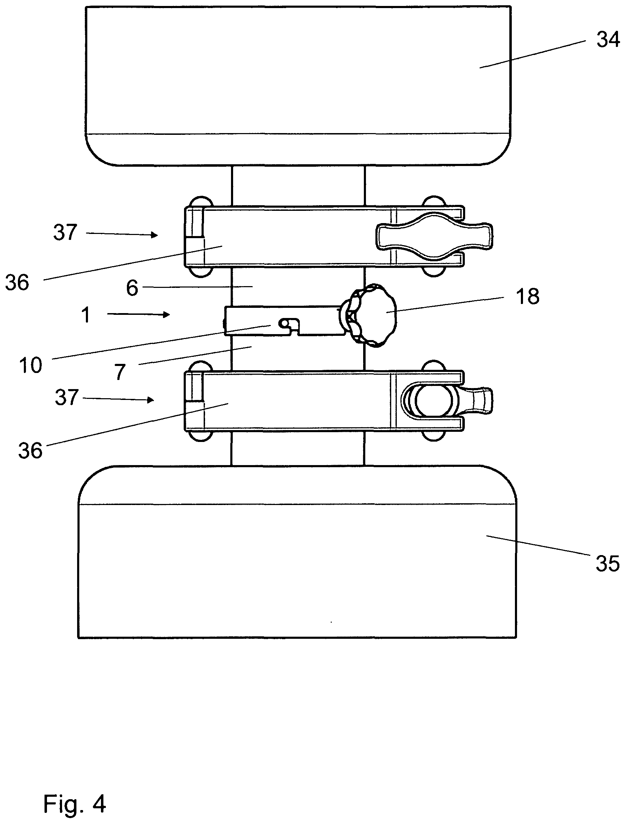

- Figur 4:: eine Seitenansicht der Vorrichtung von Fig. 2 in um 90 Grad um die Längsachse gedrehter Perspektive,
- Figur 5:: eine Seitenansicht im Schnitt als Explosionszeichnung einer Vorrichtung entsprechend Fig. 3 ohne Klemmverbinder und ohne Betätigungsteil,

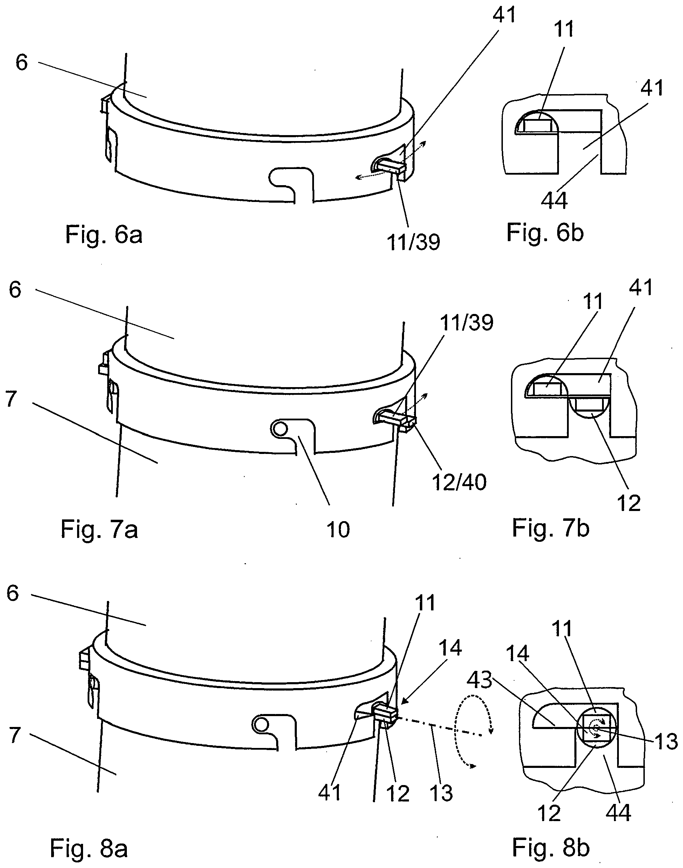

- Figur 6a:: eine räumliche Darstellung des ersten Gehäusestückes von Fig. 1 im Ausriss und vergrößerter Darstellung mit verriegelter erster Halbwelle,
- Figur 6b:: eine Seitenansicht der verriegelten Halbwelle von Fig. 6a im Ausriss und vergrößerter Darstellung,
- Figur 7a:: eine räumliche Darstellung der miteinander verriegelten Gehäusestücke von Fig. 1 im Ausriss und vergrößerter Darstellung mit verriegelter erster Halbwelle und von der ersten Halbwelle blockierten zweiten Halbwelle,
- Figur 7b:: eine Seitenansicht der verriegelten Halbwelle von Fig. 7a im Ausriss und vergrößerter Darstellung,
- Figur 8a:: eine räumliche Darstellung der miteinander verriegelten Gehäusestücke von Fig. 1 im Ausriss und vergrößerter Darstellung mit entriegelter erster Halbwelle und der freigegebenen zweiten Halbwelle, die mit der ersten Halbwelle eine schwenkbare Welle bildet,
- Figur 8b:: eine Seitenansicht der Halbwelle von Fig. 8a im Ausriss und vergrößerter Darstellung,
- Figur 9:: eine Seitenansicht im Schnitt einer weiteren Vorrichtung mit verriegelten Gehäusestücken und zwei kappenförmigen Dichtungen am Außenrand der Ventilscheiben,
- Figur 10:: eine Seitenansicht im Schnitt einer weiteren Vorrichtung mit verriegelten Gehäusestücken und über Rasthaken an den Ventilscheiben und Noppen an den Gehäusestücken mit den Gehäusestücken verrastbaren Ventilscheiben,
- Figur 11:: eine Draufsicht auf die erste Ventilscheibe von Fig. 10 mit gestrichelt angedeuteten Noppen des ersten Gehäusestückes,
- Figur 12:: eine Seitenansicht in vergrößerter Darstellung der Ventilscheiben von Fig. 9,
- Figur 13:: eine Seitenansicht im Schnitt und in vergrößerter Darstellung der ersten Ventilscheibe von Fig. 9,
- Figur 14:: eine Seitenansicht im Schnitt und in vergrößerter Darstellung der zweiten Ventilscheibe von Fig. 9 und
- Figur 15:: eine Draufsicht auf die zweite Ventilscheibe von Fig. 14 aus Richtung XV.

Eine Ventilvorrichtung 1 besteht im Wesentlichen aus einem Zulauf 2, einem Ablauf 3 und zwei in Fließrichtung hintereinander angeordneten Ventilscheiben 4, 5.

Der Zulauf 2 wird von einem ersten Gehäusestück 6 gebildet. Der Ablauf 3 wird von einem zweiten Gehäusestück 7 gebildet.

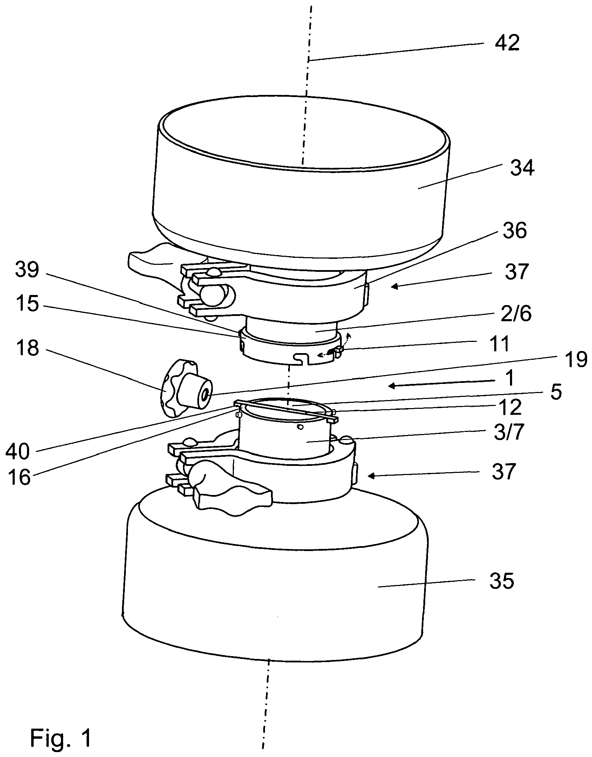

Die beiden Gehäusestücke 6, 7 sind an ihren einander zugewandten Enden 8, 9 über mindestens eine Verriegelung 10 (im Ausführungsbeispiel der Figur 1 vier Verriegelungen 10), die als ein Bajonettverschluss ausgebildet sein kann, miteinander verriegelbar. Das erste Gehäusestück 6 weist an seinem Ende 8 die erste Ventilscheibe 4 auf. Das zweite Gehäusestück 7 weist an seinem Ende 9 die zweite Ventilscheibe 5 auf. Die erste Ventilscheibe 4 weist eine mit ihr fest verbundene Halbwelle 11, mit der sie in dem Ende 8 schwenkbar gelagert ist, auf. Entsprechend weist die zweite Ventilscheibe 5 eine zweite Halbwelle 12 auf, mit der sie in dem Ende 9 schwenkbar gelagert ist.

Im verriegelten Zustand der Gehäusestücke 6, 7 bilden die Halbwellen 11, 12 eine gemeinsame um eine virtuelle Drehachse 13 schwenkbare Welle 14. Die Halbwellen 11, 12 ragen mit ihren Wellenenden 39, 40 jeweils aus den sie aufnehmenden Wänden 15, 16 der Gehäusestücke 6, 7 heraus und bilden im verriegelten Zustand der Gehäusestücke 6, 7 einen Formansatz 17, auf den ein Betätigungsteil 18 mit einer korrespondierenden Aufnahmeöffnung 19 aufsteckbar ist.

Im Ausführungsbeispiel weist der Formansatz 17 einen Vierkant 20 als Querschnitt auf.
In der Wand 15 des unteren Endes 8 des ersten Gehäusestückes 6 sind zwei einander gegenüberliegende L-förmige Aussparungen 41 angeordnet, die die Enden 39 der ersten Halbwelle 11 aufnehmen, wobei die erste Halbwelle 11 durch Verschwenken um die Längsachse 42 der Ventilvorrichtung 1 mit ihren Enden 39 in den quer zur Längsachse 42 verlaufenden kurzen Schenkeln 43 der L-förmige Aussparungen 41 verriegelbar sind. Durch die halbkreisförmige Form der Enden 39 wird ein Verdrehen der Halbachse 11 und damit der ersten Ventilscheibe 4 in der verriegelten Stellung der ersten Halbwelle 11 formschlüssig verhindert.

In der verriegelten Stellung der Gehäusestücke 6, 7 greifen die Enden 40 der zweiten Halbwelle 12 in die parallel zur Längsachse 42 verlaufenden langen Schenkel 43 der L-förmige Aussparungen 41 ein, so dass sie in der entriegelten Stellung der ersten Halbwelle 11 die erste Halbwelle 11 mit der zweiten Halbwelle 12 die schwenkbare Welle 14 bildet. In ihrer verriegelten Stellung blockiert die erste Halbwelle 11 zugleich die Drehung bzw. das Verschwenken der zweiten Halbwelle 12.

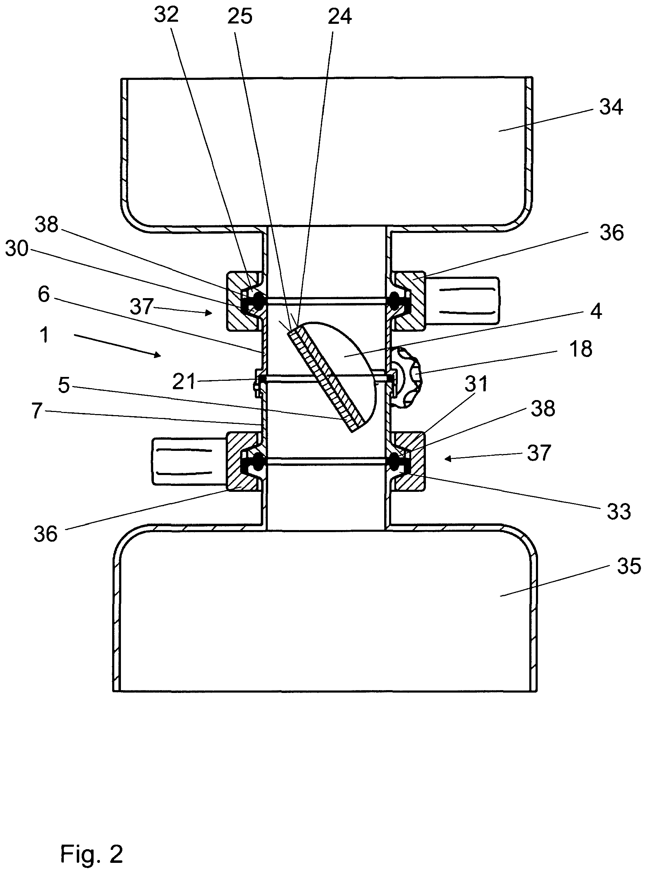

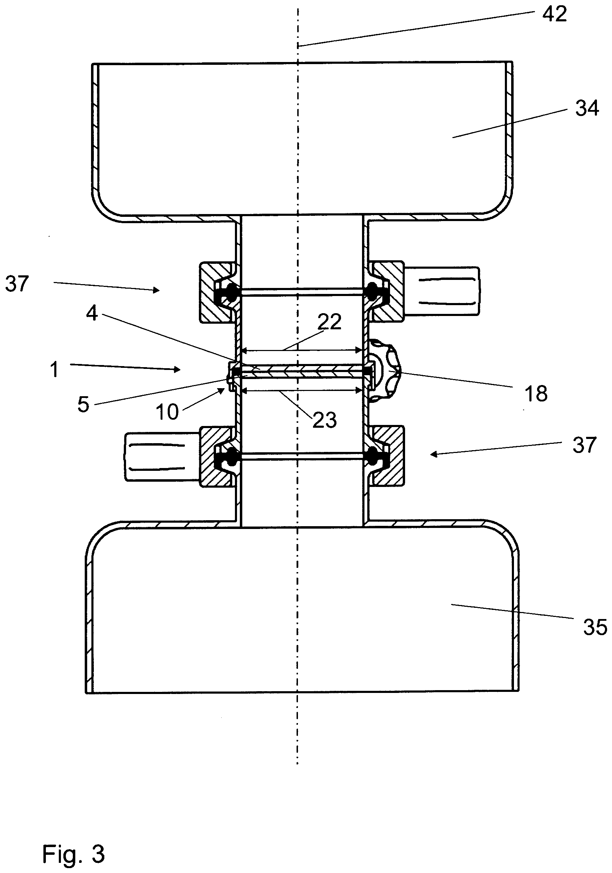

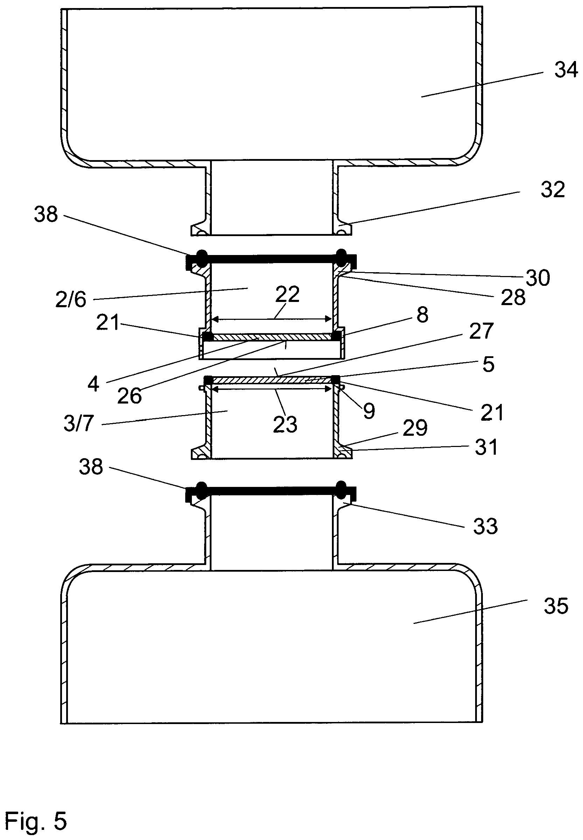

Entsprechend den Ausführungsbeispielen der Figuren 2, 3, 5 weisen die Enden 8, 9 der Gehäusestücke 6, 7 jeweils eine Dichtung 21 auf, die das Lumen 22, 23 der Gehäusestücke 6, 7 gegenüber den Außenrändern 24, 25 der Ventilscheiben 4, 5 abdichten.

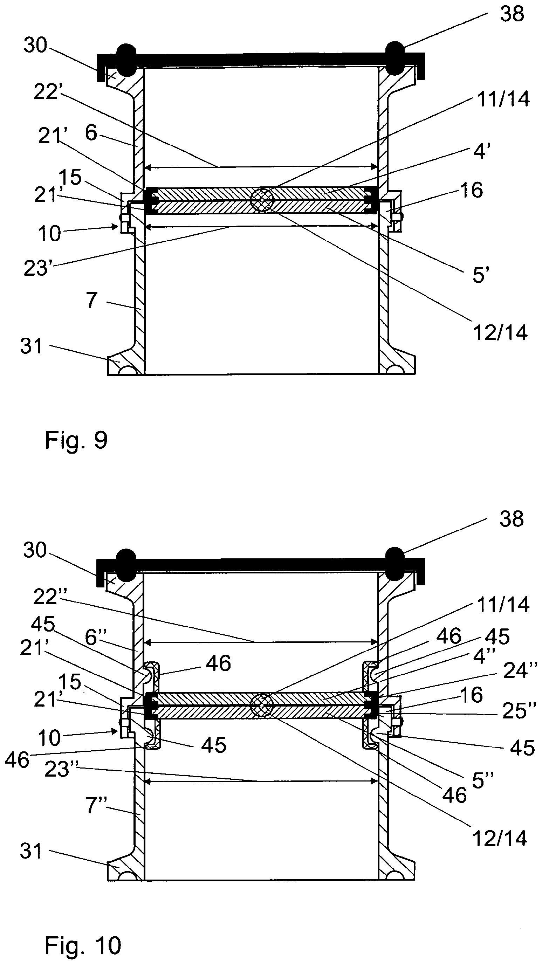

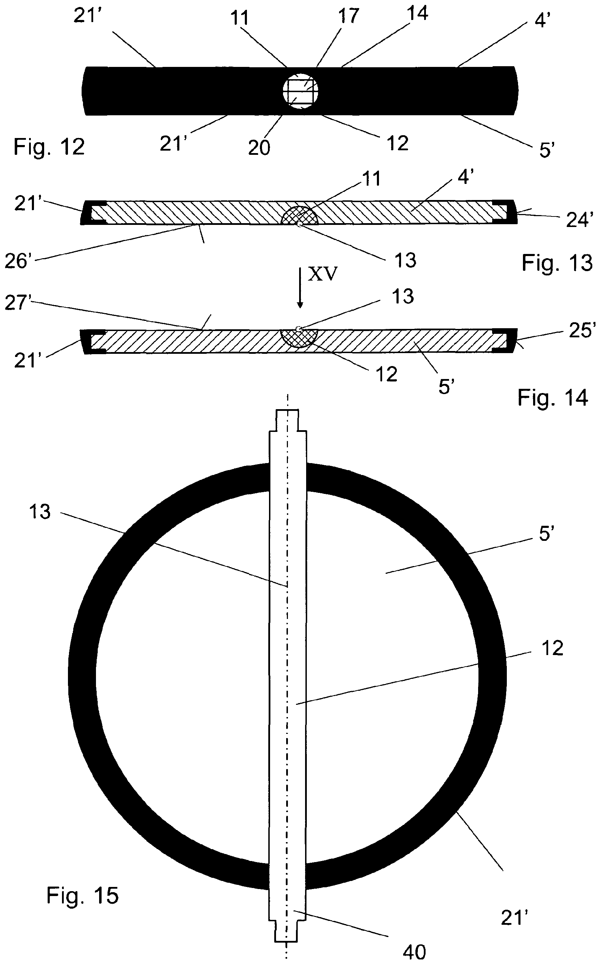

Entsprechend den Ausführungsbeispielen der Figuren 9 bis 15 weisen die Ventilscheiben 4', 4'', 5' 5'' zur Abdichtung gegenüber des benachbarten Lumens 22', 22", 23' 23" jeweils eine Dichtung 21', 21" auf, die den Außenrand 24', 24'', 25' der Ventilscheibe 4', 4'', 5', 5'' jeweils kappenförmig umgibt.
Die Dichtungen 21', 21'', dichten zugleich im geöffneten Zustand der Ventilscheiben 4', 4'', 5', 5'' deren Außenränder 24', 24'', 25', 25'' so gegeneinander ab, dass kein Transfermedium zwischen die beiden einander benachbarten Außenflächen 26', 27' der Ventilscheiben 4', 4'', 5', 5'' dringen kann.

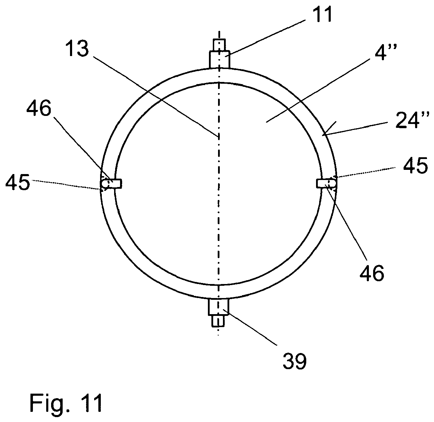

Alternativ zu den für Figur 1 beschriebenen Fixierungsmöglichkeiten für die Ventilscheiben 4'', 5'' können nach Figur 10 und 11 an den Innenwänden des ersten Gehäusestückes 6'' und des zweiten Gehäusestückes 7'' mehrere Rastnasen oder Rastnoppen 45 angebracht sein, welche jeweils von vorzugsweise flexiblen Rasthaken 46 paarweise übergreifbar sind, wodurch die jeweilige Ventilscheibe 4'' bzw. 5'' bei geschlossener Ventilvorrichtung 1 nach Art einer Schnappverbindung in ihrer jeweiligen den Zulauf 2 bzw. den Ablauf 3 verschließenden Position arretierbar ist. Diese Schnappverbindung kann jeweils durch relativ geringe Kraftbeaufschlagung, wie z.B. beim Betätigen des Betätigungsteils 18, welches auf den Formansatz 17 gesteckt wird, gelöst werden, wobei der Übergriff der Rasthaken 46 über die Rastnasen oder Rastnoppen 45 aufgehoben wird und die Ventilscheiben 4'', 5'' in die geöffnete Position der Ventilvorrichtung 1 schwenken.

Die Rastnasen bzw. Rastnoppen 45 und die Rasthaken 46 können paarweise äquidistant an den Innenwänden der Gehäusestücke 6, 7 bzw. an den Außenrändern 24'', 25'' der Ventilscheiben 4'', 5'' angebracht sein, wobei mindestens zwei Rastnoppen-Rasthakenpaare vorhanden sind.

Die Gehäusestücke 6, 6'', 7, 7'' weisen an ihren den ersten Enden 8, 9 abgewandten zweiten Enden 28, 29 der Gehäusestücke 6, 6'', 7, 7'' jeweils ein Anschlussstück 30, 31 zum Anschluss an ein korrespondierendes Anschlussstück 32, 33 auf.

Das mit dem ersten Anschlussstück 30 korrespondierende Anschlussstück 32 ist mit einem ersten Behälter 34, der das Transfermedium enthält, verbunden. Das mit dem zweiten Anschlussstück 31 korrespondierende Anschlussstück 33 ist mit einem zweiten Behälter 35, in den das Transfermedium transferiert werden soll, verbunden. Die miteinander korrespondierenden Anschlussstücke 30, 32 und 31, 33 sind jeweils über einen Klemmbügel 36 miteinander verbunden. Zwei miteinander korrespondierende Anschlussstücke 30, 32 und 31, 33 bilden jeweils in Verbindung mit den ihnen zugeordneten Klemmbügel 36 eine so genannte Tri-Clamp-Verbindung 37. Zwischen zwei miteinander korrespondierenden Anschlussstücken 30, 32 und 31, 33 ist jeweils eine Dichtung 38 angeordnet.

Im Ausführungsbeispiel ist das in dem ersten Behälter 34 enthaltende Transfermedium ein Pulver, das in den zweiten Behälter 35, der ein Ziel- oder ein Mischbeutel ist, staubfrei transferierbar ist.

Zum Transferieren eines Transfermediums aus dem ersten Behälter 34 in den zweiten Behälter 35 werden folgende Schritte durchgeführt:
a) Verbinden des ersten Gehäusestückes 6, 6" über sein erstes Anschlussstück 30 mit dem korrespondierenden Anschlussstück 32 des ersten Behälters 34 durch Aufsetzen und Verschrauben eines Klemmbügels 36;
b) Verbinden des zweiten Gehäusestückes 7, 7'' über sein zweites Anschlussstück 31 und sein korrespondierendes Anschlussstück 33 durch Aufsetzen und Verschrauben des Klemmbügels 36 mit dem zweiten Behälter 35;
c) Verbinden der die Ventilscheiben 4, 4', 4'', 5, 5', 5'' aufweisenden Enden 8, 9 der Gehäusestücke 6, 6'', 7, 7'' so miteinander, dass die beiden Halbwellen 11, 12 eine gemeinsame Welle 14 und die Ventilscheiben 4, 4', 4'', 5, 5', 5" mit ihren einander zugewandten Außenflächen 26, 26', 27, 27' dicht aneinanderliegen;
d) Aufstecken des Betätigungsteiles 18 auf den Formansatz 17 der Welle 14,
e) Öffnen der Ventilvorrichtung 1 durch Verschwenken der gemeinsamen Welle 14, mit der die Ventilscheiben 4, 4',4'', 5, 5', 5" in eine geöffnete Stellung geschwenkt werden;
f) Schließen der Ventilvorrichtung 1 durch Zurückschwenken der beiden Ventilscheiben 4, 4', 4'', 5, 5', 5'' in ihre geschlossene Stellung, nachdem die vorgesehene Menge an Transfermedium in den zweiten Behälter 35 transferiert wurde; und
g) Lösen der Verbindung zwischen dem ersten Behälter 34 und dem zweiten Behälter 35 durch Abziehen des Betätigungsteiles 18 und Lösen der beiden durch die Ventilscheiben 4, 4', 5, 5' verschlossenen Gehäusestücke 6, 7 voneinander,
   wobei in einer Wand (15) des unteren Endes (8) des ersten Gehäusestückes (6) zwei einander gegenüberliegende L-förmige Aussparungen (41) angeordnet sind, die halbkreisförmige Enden (39) der ersten Halbwelle (11) aufnehmen, wobei die erste Halbwelle (11) durch Verschwenken um die Längsachse (42) der Ventilvorrichtung (1) mit ihren Enden (39) in quer zur Längsachse (42) verlaufenden kurzen Schenkeln (43) der L-förmigen Aussparungen (41) verriegelt wird und
   wobei in der verriegelten Stellung der Gehäusestücke (6, 7) Enden (40) der zweiten Halbwelle (12) in parallel zur Längsachse (42) verlaufende lange Schenkel (44) der L-förmigen Aussparungen (41) eingreifen, so dass in der entriegelten Stellung der ersten Halbwelle (11) die erste Halbwelle (11) mit der zweiten Halbwelle (12) in Schritt c) die schwenkbare Welle (14) bildet.

### Bezugszeichenliste

- 1: Ventilvorrichtung
- 2: Zulauf
- 3: Ablauf
- 4, 4', 4'': erste Ventilscheibe
- 5, 5', 5'': zweite Ventilscheibe
- 6, 6'': erstes Gehäusestück
- 7, 7'': zweites Gehäusestück
- 8: erstes Ende von 6
- 9: erstes Ende von 7
- 10: Verriegelung
- 11: erste Halbwelle
- 12: zweite Halbwelle
- 13: virtuelle Drehachse
- 14: schwenkbare Welle
- 15: Wand von 6
- 16: Wand von 7
- 17: Formansatz
- 18: Bestätigungsteil
- 19: Aufnahmeöffnung von 18
- 20: Vierkant von 17
- 21, 21',: Dichtung von 6, 7
- 22, 22', 22'': Lumen von 6
- 23, 23', 23'': Lumen von 7
- 24, 24', 24'': Außenrand von 4
- 25, 25', 25'': Außenrand von 5
- 26, 26': erste Außenfläche von 4
- 27, 27': zweite Außenfläche von 5
- 28: zweites Ende von 6
- 29: zweites Ende von 7
- 30: erstes Anschlussstück von 6
- 31: zweites Anschlussstück von 7
- 32: korrespondierendes Anschlussstück von 30
- 33: korrespondierendes Anschlussstück von 31
- 34: erster Behälter
- 35: zweiter Behälter
- 36: Klemmbügel
- 37: Tri-Clamp-Verbindung
- 38: Dichtung
- 39: Ende von 11
- 40: Ende von 12
- 41: L-förmige Aussparung von 6
- 42: Längsachse
- 43: kurzer Schenkel von 41
- 44: langer Schenkel von 41
- 45: Rastnoppen
- 46: Rasthaken

## Patentansprüche

1. Ventilvorrichtung (1) zum Transferieren eines Transfermediums, mit einem Zulauf (2), einem Ablauf (3) und zwei in Fließrichtung hintereinander angeordneten Ventilscheiben (4, 4',4'', 5, 5', 5''), die zum Öffnen und Verschließen des sie umgebenden Lumens (22, 22',22'', 23, 23', 23'') um eine gemeinsame Drehachse (13) schwenkbar sind,
wobei der Zulauf (2) und der Ablauf (3) von zwei miteinander verriegelbaren Gehäusestücken (6, 6'', 7, 7'') gebildet werden, deren einander zugewandte Enden (8, 9) jeweils eine Ventilscheibe (4, 4', 4'', 5, 5', 5'') mit einer fest verbundenen Halbwelle (11, 12) aufnehmen, wobei im verriegelten Zustand der Gehäusestücke (6, 6'', 7, 7'') die beiden Halbwellen (11, 12) eine gemeinsame um die Drehachse (13) schwenkbare Welle (14) bilden und die Ventilscheiben (4, 4', 5, 5') dicht aneinander anliegen, und
wobei im entriegelten Zustand der Gehäusestücke (6, 6'', 7, 7'') die Ventilscheiben (4, 4', 4'', 5, 5', 5'') jeweils das Lumen (22, 22', 22'', 23, 23', 23'') des sie aufnehmenden Gehäusestückes (6, 6'', 7, 7'') verschließen,
**dadurch gekennzeichnet,**
**dass** in einer Wand (15) des unteren Endes (8) des ersten Gehäusestückes (6) zwei einander gegenüberliegende L-förmige Aussparungen (41) angeordnet sind, die halbkreisförmige Enden (39) der ersten Halbwelle (11) aufnehmen, wobei die erste Halbwelle (11) durch Verschwenken um die Längsachse (42) der Ventilvorrichtung (1) mit ihren Enden (39) in quer zur Längsachse (42) verlaufenden kurzen Schenkeln (43) der L-förmigen Aussparungen (41) verriegelbar ist und
**dass** in einer verriegelten Stellung der Gehäusestücke (6, 7) Enden (40) der zweiten Halbwelle (12) in parallel zur Längsachse (42) verlaufende lange Schenkel (44) der L-förmigen Aussparungen (41) eingreifen.

2. Ventilvorrichtung nach Anspruch 1,
**dadurch gekennzeichnet,**
**dass** die beiden aneinanderliegenden Halbwellen (11, 12) mit mindestens einem Ende (39, 40) aus den sie aufnehmenden Wänden (15, 16) der Gehäusestücke (6, 6'', 7, 7'') herausragen und gemeinsam einen Formansatz (17) bilden, auf den ein Betätigungsteil (18) mit einer korrespondierenden Aufnahmeöffnung (19) aufsteckbar ist.

3. Ventilvorrichtung nach Anspruch 2,
**dadurch gekennzeichnet,**
**dass** der von den Halbwellen (11, 12) gebildete Formansatz (17) als Vierkant (20) in seinem Querschnitt ausgebildet ist.

4. Ventilvorrichtung nach einem der Ansprüche 1 bis 3,
**dadurch gekennzeichnet,**
**dass** zwischen dem Außenrand (24, 24',24'', 25, 25', 25'') der Ventilscheiben (4, 4', 4'', 5, 5', 5'') und deren benachbarten Wänden (15, 16) der Gehäusestücke (6, 6'', 7, 7'') eine Dichtung (21, 21') angeordnet ist.

5. Ventilvorrichtung nach einem der Ansprüche 1 bis 4,
**dadurch gekennzeichnet,**
**dass** der Außenrand (24', 24'', 25', 25'') der Ventilscheiben (4',4'', 5', 5'') jeweils eine kappenförmig umlaufende Dichtung (21') aufweist, die zum einen die Ventilscheiben (4',4'', 5', 5'') gegenüber dem benachbarten Lumen (22', 22' 23', 23'') und zum anderen die Ventilscheiben (4', 4'', 5', 5'') am Rand (24', 24'', 25', 25'') gegeneinander abdichtet.

6. Ventilvorrichtung nach einem der Ansprüche 1 bis 5,
**dadurch gekennzeichnet,**
**dass** die Gehäusestücke (6, 6'', 7, 7'') an ihren den Ventilscheiben (4, 4', 4'', 5, 5', 5'') abgewandten Enden (8, 9) jeweils ein Anschlussstück (30, 31) zum Anschluss an ein korrespondierendes Anschlussstück (32, 33) aufweisen.

7. Ventilvorrichtung nach einem der Ansprüche 1 bis 6,
**dadurch gekennzeichnet,**
**dass** das erste den Zulauf (2) aufweisende Gehäusestück (6) mit einem Anschlussstück (32) eines ersten Behälters (34) verbindbar ist und
**dass** das zweite den Ablauf (3) aufweisende Gehäusestück (7) mit einem Anschlussstück (33) eines zweiten Behälters (35) verbindbar ist.

8. Ventilvorrichtung nach Anspruch 7,
**dadurch gekennzeichnet,**
**dass** das Transfermedium ein Schüttgut ist und
**dass** der erste Behälter (34) als ein Beutel ausgebildet ist, aus dem das Schüttgut in den zweiten Behälter (35), der als ein Ziel- oder Mischbeutel ausgebildet ist, transferierbar ist.

9. Verfahren zum Transferieren eines Transfermediums mit einer Ventilvorrichtung (1), deren Zulauf (2) mit einem das Transfermedium enthaltenden ersten Behälter (34) verbunden wird und deren Ablauf (3) mit einem das Transfermedium aufnehmenden zweiten Behälter (35) verbunden wird,
wobei die folgenden Schritte durchgeführt werden:
a) Verbinden eines den Zulauf (2) aufweisenden ersten Gehäusestückes (6, 6', 6''), das an seinem dem ersten Behälter (34) abgewandten Ende eine erste Ventilscheibe (4, 4', 4'') mit einer ersten Halbwelle (11) in einer den Zulauf (2) verschließenden Stellung aufweist, mit dem ersten Behälter (34);
b) Verbinden eines den Ablauf (3) aufweisenden zweiten Gehäusestückes (7, 7''), das an seinem dem zweiten Behälter (35) abgewandten Ende eine zweite Ventilscheibe (5, 5', 5'') mit einer zweiten Halbwelle (12) in einer den Ablauf (3) verschließenden Stellung aufweist, mit dem zweiten Behälter (35);
c) Verbinden der die Ventilscheiben (4, 4', 4'', 5, 5', 5'') aufweisenden Enden (8, 9) der Gehäusestücke (6, 7) so miteinander, dass die beiden Halbwellen (11, 12) eine gemeinsame Welle (14) bilden und die Ventilscheiben (4, 4',4'', 5, 5', 5'') mit ihren einander zugewandten Außenflächen (26, 26', 27, 27') dicht aneinander liegen;
d) Aufstecken eines Betätigungsteiles (18) auf ein Ende der gemeinsamen Welle (14) der Ventilscheiben (4, 4', 4'', 5, 5', 5''),
e) Öffnen der Ventilvorrichtung (1) durch Verschwenken der gemeinsamen Welle (14) mit den beiden Ventilscheiben (4, 4', 4'', 5, 5', 5'') in eine geöffnete Stellung;
f) Schließen der Ventilvorrichtung (1) durch Zurückschwenken der beiden Ventilscheiben (4, 4', 4'', 5, 5', 5'') in ihre geschlossene Stellung, nachdem die vorgesehene Menge an Transfermedium in den zweiten Behälter (35) transferiert ist; und
g) Lösen der Verbindung zwischen dem ersten und dem zweiten Behälter (34, 35) durch Abziehen des Betätigungsteiles (18) und Lösen der beiden durch die Ventilscheiben (4, 4', 4'', 5, 5', 5'') verschlossenen Gehäusestücke (6, 6'', 7, 7'') voneinander **dadurch gekennzeichnet,**
**dass** in einer Wand (15) des unteren Endes (8) des ersten Gehäusestückes (6) zwei einander gegenüberliegende L-förmige Aussparungen (41) angeordnet sind, die halbkreisförmige Enden (39) der ersten Halbwelle (11) aufnehmen, wobei die erste Halbwelle (11) durch Verschwenken um die Längsachse (42) der Ventilvorrichtung (1) mit ihren Enden (39) in quer zur Längsachse (42) verlaufenden kurzen Schenkeln (43) der L-förmigen Aussparungen (41) verriegelt wird und
**dass** in der verriegelten Stellung der Gehäusestücke (6, 7) Enden (40) der zweiten Halbwelle (12) in parallel zur Längsachse (42) verlaufende lange Schenkel (44) der L-förmigen Aussparungen (41) eingreifen, so dass in der entriegelten Stellung der ersten Halbwelle (11) die erste Halbwelle (11) mit der zweiten Halbwelle (12) in Schritt c) die schwenkbare Welle (14) bildet.

10. Verfahren nach Anspruch 9,
**dadurch gekennzeichnet,**
**dass** die die Ventilscheiben (4, 4', 4'' 5, 5', 5'') aufweisenden Enden (8, 9) der Gehäusestücke (6'', 7'') durch Ineinanderstecken und Verdrehen miteinander verrastet werden.

11. Verfahren nach Anspruch 9 oder 10,
**dadurch gekennzeichnet,**
**dass** als Transfermedium ein pulverförmiges Filterhilfsmittel für eine Anschwemmfiltration transferiert wird.

## Claims

1. Valve device (1) for transferring a transfer medium, with an inflow (2), an outflow (3) and two valve discs (4, 4', 4", 5, 5', 5"), which are arranged one behind the other in flow direction and which are pivotable about a common axis (13) of rotation for opening and closing the bore (22, 22', 22', 23, 23', 23") surrounding them,
wherein the inflow (2) and the outflow (3) are formed by two housing members (6, 6", 7, 7"), which can be locked together and the mutually facing ends of which each receive a respective valve disc (4, 4', 4", 5, 5', 5") with a fixedly connected half shaft (11, 12), wherein in the locked state of the housing members (6, 6", 7, 7") the two half shafts (11, 12) form a common shaft (14) pivotable about the axis (13) of rotation and the valve discs (4, 4', 5, 5') bear tightly against one another, and
wherein in the unlocked state of the housing members (6, 6", 7, 7") the valve discs (4, 4', 4", 5, 5', 5") each close the respective bore (22, 22', 22", 23, 23', 23") of the housing member (6, 6", 7, 7") receiving them,
**characterised in that**
two mutually opposite L-shaped cut-outs (41) receiving the semicircular ends (39) of the first half shaft (11) are arranged in a wall (15) of the lower end (8) of the first housing member (6), wherein the first half shaft (11) by pivotation about the longitudinal axis (42) of the valve device (1) is lockable by its ends (39) in short limbs (43), which extend transversely to the longitudinal axis (42), of the L-shaped cut-outs (41), and
ends (40) of the second half shaft (12) engage in long limbs (44), which extend parallel to the longitudinal axis (42), of the L-shaped cut-outs (41) in a locked setting of the housing members (6, 7).

2. Valve device according to claim 1, **characterised in that** the two half shafts (11, 12) bearing against one another project by at least one end (39, 40) out of the walls (15, 16), which receive them, of the housing members (6, 6", 7, 7") and together form a shaped projection (17) onto which an actuating member (18) can be plugged by a corresponding receiving opening (19).

3. Valve device according to claim 2, **characterised in that** the shaped projection (17) formed by the half shafts (11, 12) is formed as a square (20) in its cross-section.

4. Valve device according to any one of claims 1 to 3, **characterised in that** a seal (21, 21') is arranged between the outer edge (24, 24', 24", 25, 25', 25") of the valve discs (4, 4', 4", 5, 5', 5") and the walls (15, 16), which are adjacent thereto, of the housing members (6, 6", 7, 7").

5. Valve device according to any one of claims 1 to 4, **characterised in that** the outer edge (24', 24", 25', 25") of the valve discs (4', 4", 5', 5") each comprise a cap-shaped encircling seal (21') which on the one hand seals the valve discs (4', 4", 5', 5") relative to the adjacent bore (22', 22", 23', 23") and on the other hand seals the valve discs (4', 4", 5', 5") at the edge (24', 24", 25', 25") relative to one another.

6. Valve device according to any one of claims 1 to 5, **characterised in that** the housing members (6, 6", 7, 7") have at each of the ends (8, 9) thereof remote from the valve discs (4, 4', 4", 5, 5', 5") a respective connecting member (30, 31) for connection with a corresponding connection member (32, 33).

7. Valve device according to any one of claims 1 to 6, **characterised in that** the first housing member (6) having the inflow (2) is connectible with a connecting member (32) of a first container (34) and that the second housing member (7) having the outflow (3) is connectible with a connecting member (33) of a second container (35).

8. Valve device according to claim 7, **characterised in that** the transfer medium is a pourable material and that the first container (34) is formed as a bag from which the pourable material is transferrable into the second container (35), which is constructed as a final bag or mixing bag.

9. Method for transferring a transfer medium by a valve device (1), the inflow (2) of which is connected with a first container (34) containing the transfer medium and the outflow (3) of which is connected with a second container (35) receiving the transfer medium, wherein the following steps are carried out:
a) connecting a first housing member (6, 6', 6"), which has the inflow (2) and which at its end remote from the first container (34) comprises a first valve disc (4, 4', 4") with a first half shaft (11) in a setting closing the inflow (2), with the first container (34);
b) connecting a second housing member (7, 7"), which has the outflow (3) and which at its end remote from the second container (35) comprises a second valve disc (5, 5', 5") with a second half shaft (12) in a setting closing the outflow (3), with the second container (35);
c) connecting the ends (8, 9), which have the valve discs (4, 4', 4", 5, 5', 5"), of the housing members (6, 7) together in such a way that the two half shafts (11, 12) form a common shaft (14) and the valve discs (4, 4', 4", 5, 5', 5") tightly bear against one another by the mutually facing outer surfaces (26, 26', 27, 27') thereof;
d) plugging an actuating member (18) onto an end of the common shaft (14) of the valve discs (4, 4', 4", 5, 5', 5");
e) opening the valve device (1) by pivoting the common shaft (14) with the two valve discs (4, 4', 4", 5, 5', 5") into an open setting;
f) closing the valve device (1) by pivoting the two valve discs (4, 4', 4", 5, 5', 5") back into the closed setting thereof after the intended quantity of transfer medium has transferred to the second container (35); and
g) releasing the connection between the first and the second containers (34, 35) by withdrawing the actuating member (18) and releasing the two housing members (6, 6", 7, 7"), which are closed by the valve discs (4, 4', 4", 5, 5', 5"), from one another; **characterised in that**
two mutually opposite L-shaped cut-outs (41) receiving the semicircular ends (39) of the first half shaft (11) are arranged in a wall (15) of the lower end (8) of the first housing member (6), wherein the first half shaft (11) through pivotation about the longitudinal axis (42) of the valve device (1) is locked by its ends (39) in short limbs (43), which extend transversely to the longitudinal axis (42), of the L-shaped cut-outs (41) and
ends (40) of the second half shaft (12) engage in long limbs (44), which extend parallel to the longitudinal axis (42), of the L-shaped cut-outs (41) in the locked setting of the housing members (6, 7) so that in the unlocked setting of the first half shaft (11) the first half shaft (11) forms together with the second half shaft (12) the pivotable shaft (14) in step c).

10. Method according to claim 9, **characterised in that** the ends (8, 9) of the housing members (6", 7") having the valve discs (4, 4', 4", 5, 5', 5") are detented together by plugging one into the other and turning.

11. Method according to claim 9 or 10, **characterised in that** a pulverulent filter aid for sedimentation filtration is transferred as transfer medium.

## Revendications

1. Dispositif de soupape (1) pour le transfert d'un milieu de transfert, comprenant une arrivée (2), une évacuation (3) et deux disques de soupape (4, 4', 4'', 5, 5', 5'') agencés l'un derrière l'autre dans le sens d'écoulement, qui peuvent être amenés à pivoter autour d'un axe de rotation (13) commun pour ouvrir et fermer le conduit (22, 22', 22'', 23, 23', 23'') qui les entoure,
dans lequel l'arrivée (2) et l'évacuation (3) sont formées par deux pièces de boîtier (6, 6'', 7, 7'') pouvant être verrouillées l'une avec l'autre, dont les extrémités (8, 9) tournées l'une vers l'autre reçoivent chacune un disque de soupape (4, 4', 4'', 5, 5', 5'') auquel un demi-arbre (11, 12) est relié solidement, dans lequel les deux demi-arbres (11, 12), une fois les pièces de boîtier (6, 6'', 7, 7'') verrouillées, forment un arbre (14) commun pouvant tourner autour de l'axe de rotation (13) et les disques de soupape (4, 4', 5, 5') s'appliquent de manière étanche les uns contre les autres, et
dans lequel une fois les pièces de boîtier (6, 6'', 7, 7'') verrouillées, les disques de soupape (4, 4', 4'', 5, 5', 5'') ferment chacun le conduit (22, 22', 22'', 23, 23', 23'') de la pièce de boîtier (6, 6'', 7, 7'') qui les reçoit,
**caractérisé**
**en ce que** deux évidements (41) en forme de L opposés l'un à l'autre, qui reçoivent les extrémités (39) en forme de demi-cercle du premier demi-arbre (11), sont ménagés dans une paroi (15) de l'extrémité inférieure (8) de la première pièce de boîtier (6), dans lequel le premier demi-arbre (11) peut être verrouillé par pivotement autour de l'axe longitudinal (42) du dispositif de soupape (1) par ses extrémités (39) dans des branches courtes (43), s'étendant transversalement à l'axe longitudinal (42), des évidements en forme de L et
**en ce que**, dans une position verrouillée des pièces de boîtier (6, 7), les extrémités (40) du deuxième demi-arbre (12) s'insèrent dans des branches longues (41), s'étendant parallèlement à l'axe longitudinal (42), des évidements (41) en forme de L.

2. Dispositif de soupape selon la revendication 1,
**caractérisé**
**en ce que** les deux demi-arbres (11, 12) s'appliquant l'un contre l'autre font saillie, par au moins une extrémité (39, 40), des parois (15, 16) des pièces de boîtier (6, 6'', 7, 7''), lesquelles parois reçoivent les demi-arbres, et forment conjointement une partie façonnée en retrait (17) sur laquelle une pièce d'actionnement (18) présentant une ouverture de réception (19) correspondante peut être emboîtée.

3. Dispositif de soupape selon la revendication 2,
**caractérisé**
**en ce que** la partie façonnée en retrait (17) formée par les demi-arbres (11, 12) est réalisée sous la forme d'un quatre-pans (20) dans sa section transversale.

4. Dispositif de soupape selon l'une quelconque des revendications 1 à 3,
**caractérisé**
**en ce qu'**un joint (21, 21') est agencé entre le bord extérieur (24, 24', 24'', 25, 25', 25'') des disques de soupape (4, 4', 4'', 5, 5', 5'') et les parois (15, 16) voisines de ceux-ci des pièces de boîtier (6, 6'', 7, 7'').

5. Dispositif de soupape selon l'une quelconque des revendications 1 à 4,
**caractérisé**
**en ce que** le bord extérieur (24', 24'', 25', 25'') des disques de soupape (4', 4'', 5', 5'') présente respectivement un joint (21') périphérique en forme de capuchon qui étanchéifie d'une part les disques de soupape (4', 4'', 5', 5'') vis-à-vis du conduit (22', 22', 23', 23'') voisin et d'autre part les disques de soupape (4', 4'', 5', 5'') les uns vis-à-vis des autres sur le bord (24', 24'', 25', 25'').

6. Dispositif de soupape selon l'une quelconque des revendications 1 à 5,
**caractérisé**
**en ce que** les pièces de boîtier (6, 6'', 7, 7'') présentent à leurs extrémités (8, 9) opposées aux disques de soupape (4, 4', 4'', 5, 5', 5'') respectivement une pièce de raccordement (30, 31) pour le raccordement à une pièce de raccordement (32, 33) correspondante.

7. Dispositif de soupape selon l'une quelconque des revendications 1 à 6,
**caractérisé**
**en ce que** la première pièce de boîtier (6) comprenant l'arrivée (2) peut être reliée à une pièce de raccordement (32) d'un premier récipient (34) et
**en ce que** la deuxième pièce de boîtier (7) comprenant l'évacuation (3) peut être reliée à une pièce de raccordement (33) d'un deuxième récipient (35).

8. Dispositif de soupape selon la revendication 7,
**caractérisé**
**en ce que** le milieu de transfert est un produit en vrac et
**en ce que** le premier récipient (34) est réalisé sous la forme d'un sachet, à partir duquel le produit en vrac peut être transféré dans le deuxième récipient (35) qui est réalisé sous la forme d'un sachet cible ou de mélange.

9. Procédé de transfert d'un milieu de transfert au moyen d'un dispositif de soupape (1), dont l'arrivée (2) est reliée au premier récipient (34) contenant le milieu de transfert et dont l'évacuation (3) est reliée à un deuxième récipient (35) recevant le milieu de transfert,
dans lequel les étapes suivantes sont mises en oeuvre :
a) la liaison d'une première pièce de boîtier (6, 6', 6''), qui comprend l'arrivée (2) et qui comprend à son extrémité opposée au premier récipient (34) un premier disque de soupape (4, 4', 4'') pourvu d'un premier demi-arbre (11) dans une position fermant l'arrivée (2), au premier récipient (34) ;
b) la liaison d'une deuxième pièce de boîtier (7, 7''), qui comprend l'évacuation (3) et qui comprend à son extrémité opposée au deuxième récipient (35) un deuxième disque de soupape (5, 5', 5'') pourvu d'un deuxième demi-arbre (12) dans une position fermant l'évacuation (3), au deuxième récipient (35) ;
c) la liaison des extrémités (8, 9) des pièces de boîtier (6, 7) l'une à l'autre, lesdites extrémités comprenant les disques de soupape (4, 4', 4'', 5, 5', 5''), de sorte que les deux demi-arbres (11, 12) forment un arbre (14) commun et que les disques de soupape (4, 4', 4'', 5, 5', 5'') s'appliquent de manière étanche les uns contre les autres par leurs surfaces extérieures (26, 26',27, 27') tournées les unes vers les autres ;
d) l'emboîtement d'une partie d'actionnement (18) sur une extrémité de l'arbre (14) commun des disques de soupape (4, 4', 4'', 5, 5', 5''),
e) l'ouverture du dispositif de soupape (1) par pivotement de l'arbre (14) commun comprenant les deux disques de soupape (4, 4', 4'', 5, 5', 5'') dans une position ouverte ;
f) la fermeture du dispositif de soupape (1) par pivotement de retour des deux disques de soupape (4, 4', 4'', 5, 5', 5'') dans leur position fermée, après que la quantité prévue de milieu de transfert a été transférée dans le deuxième récipient (35) ; et
g) la libération de la liaison entre le premier et le deuxième récipient (34, 35) par retrait de la pièce d'actionnement (18) et par détachement l'une de l'autre des deux pièces de boîtier (6, 6'', 7, 7'') fermées par les disques de soupape (4, 4', 4'', 5, 5', 5''),
**caractérisé**
**en ce que** deux évidements (41) en forme de L opposés l'un à l'autre, qui reçoivent les extrémités (39) semi-circulaires du premier demi-arbre (11), sont ménagés dans une paroi (15) de l'extrémité inférieure (8) de la première pièce de boîtier (6), dans lequel le premier demi-arbre (11) est verrouillé par pivotement autour de l'axe longitudinal (42) du dispositif de soupape (1) par ses extrémités (39) dans des branches courtes (43), s'étendant transversalement à l'axe longitudinal (42), des évidements (41) en forme de L et
**en ce que**, dans la position verrouillée des pièces de boîtier (6, 7), les extrémités (40) du deuxième demi-arbre (12) s'insèrent dans des branches longues (44), s'étendant parallèlement à l'axe longitudinal (42), des évidements (41) en forme de L, de sorte que lorsque le premier demi-arbre (11) se trouve dans la position déverrouillée, le premier demi-arbre (11) forme avec le deuxième demi-arbre (12) à l'étape c) l'arbre (14) pivotant.

10. Procédé selon la revendication 9,
**caractérisé**
**en ce que** les extrémités (8, 9) des pièces de boîtier (6'', 7''), lesquelles extrémités comprennent les disques de soupape (4, 4', 4'', 5, 5', 5''), sont encliquetées l'une dans l'autre par emboîtement et rotation.

11. Procédé selon la revendication 9 ou 10,
**caractérisé**
**en ce qu'**un adjuvant de filtration pulvérulent est transféré en tant que milieu de transfert pour une filtration à pré-couche.
